# FASCICULE DE BREVET EUROPEEN

(11) **EP 2 188 667 B1**
(45) Date de publication et mention de la délivrance du brevet: **06.03.2019**
(21) Numéro de dépôt: 08837712.2
(22) Date de dépôt: 12.09.2008
(51) Int. Cl.: C03C 15/00, C03C 17/34, C03C 17/30, C03C 19/00, C03C 23/00, B24B 9/14

(54) **PROCEDE DE PREPARATION DE LA SURFACE D'UNE LENTILLE COMPORTANT UN REVETEMENT ANTI-SALISSURES EN VUE DE SON DEBORDAGE**
VERFAHREN ZUR BEARBEITUNG DER OBERFLÄCHE EINER LINSE MIT EINER ANTIVERSCHMUTZUNGSBESCHICHTUNG ZU IHRER ÄTZUNG
METHOD FOR PREPARING THE SURFACE OF A LENS INCLUDING AN ANTI-SOILING COATING FOR EDGING THE SAME

(30) Priorité: 14.09.2007 FR 0757557
(43) Date de publication de la demande: 26.05.2010
(73) Titulaire: Essilor International, 94220 Charenton-le-Pont (FR)
(72) Inventeur: HABASSI, Chefik, F-94220 Charenton Le Pont (FR); YAIGRE, Marcel, F-94220 Charenton Le Pont (FR)
(74) Mandataire: Jacobacci Coralis Harle
(86) Numéro de dépôt international: PCT/FR2008/051640
(87) Numéro de publication internationale: WO 2009/047426

(56) Documents cités:
- EP-A- 1 167 312
- WO-A-02/092524
- FR-A- 2 845 636
- FR-A- 2 847 346
- US-A1- 2002 008 847
- US-A1- 2007 090 092

## Description

L'invention se rapporte d'une manière générale au domaine des verres pour l'optique, en particulier des lentilles, et plus particulièrement des lentilles ophtalmiques, pourvues d'un revêtement externe à propriétés hydrophobes et/ou oléophobes (top coat anti-salissures) revêtu d'un revêtement temporaire facilitant le débordage du verre.

Une lentille optique, notamment une lentille ophtalmique, résulte d'une succession d'opérations de moulage et/ou de surfaçage / polissage qui déterminent la géométrie des deux surfaces optiques convexe et concave de la lentille, puis de traitements de surface appropriés.

La dernière étape de finition d'une lentille ophtalmique est l'opération de débordage ou détourage, qui consiste à usiner la tranche ou la périphérie de la lentille de façon à la conformer aux dimensions requises pour adapter la lentille à la monture de lunette dans laquelle elle est destinée à prendre place.

Le débordage est réalisé généralement sur une meuleuse comprenant des meules diamantées qui effectuent l'usinage tel que défini ci-dessus. La lentille est maintenue, lors de cette opération, par des organes de blocage intervenant axialement. Le mouvement relatif du verre par rapport à la meule est contrôlé, généralement numériquement, afin de réaliser la forme souhaitée. Comme cela apparaît, il est tout à fait impératif que la lentille soit fermement maintenue lors de ce mouvement.

Pour cela, avant l'opération de débordage, on effectue une opération de glantage de la lentille, c'est à dire que l'on vient positionner sur la surface convexe de la lentille un moyen de maintien ou gland. Un patin de maintien, tel qu'une pastille autocollante, par exemple un patin adhésif double face, est disposé entre le gland et la surface convexe de la lentille. Le gland auquel adhère la lentille par l'intermédiaire du patin adhésif est alors mécaniquement fixé dans l'axe de montage de la meuleuse et un bras axial vient bloquer la lentille en appliquant une force centrale sur la face de la lentille opposée au gland. Lors de l'usinage, un effort de couple tangentiel est généré sur la lentille, ce qui peut engendrer une rotation de la lentille par rapport au gland si le système de maintien de la lentille n'est pas assez efficace. Le bon maintien de la lentille dépend principalement de la bonne adhérence à l'interface patin de maintien/surface convexe de la lentille.

Les lentilles ophtalmiques de dernière génération comportent le plus souvent une couche extérieure organique ou minérale qui modifie l'énergie de surface, par exemple des revêtements hydrophobes et/ou oléophobes anti-salissures, bien connus dans la technique. Il s'agit le plus souvent de matériaux de type fluorosilane, qui diminuent l'énergie de surface afin d'éviter l'adhérence de souillures grasses qu'il est ainsi plus facile d'éliminer.

Ce type de revêtement de surface peut être d'une efficacité telle que l'adhérence à l'interface patin/surface convexe peut s'en trouver altérée, ce qui rend difficile des opérations de débordage satisfaisantes, en particulier pour des lentilles en polycarbonate (noté PC, par exemple le polycarbonate de bisphénol-A) dont le débordage génère des efforts beaucoup plus importants que pour les autres matières.

Lors du débordage, la lentille ne doit pas subir un désaxage supérieur à 2°, de préférence d'au plus 1 °, et par conséquent l'adhésion du patin sur la surface de la lentille est essentielle à l'obtention d'un débordage satisfaisant. La conséquence d'une opération de débordage mal menée est la perte pure et simple de la lentille.

Pour remédier à ces difficultés de débordage des lentilles pourvues d'un revêtement externe hydrophobe et/ou oléophobe, on a proposé de former sur ces revêtements un revêtement temporaire, de nature organique ou minérale, en particulier une couche protectrice de MgF₂. Par exemple, les demandes de brevet européen EP 1392613 et EP 1633684, au nom du déposant, décrivent l'emploi d'un tel revêtement temporaire, qui accroît l'énergie de surface et permet donc à l'opticien de procéder à un débordage fiable de la lentille. Après débordage, le revêtement temporaire doit être enlevé afin de restituer à la lentille ses propriétés de surface hydrophobes et/ou oléophobes.

Le dépôt de films protecteurs pelables de nature polymère sur des revêtements anti-salissures a été décrit notamment dans les demandes de brevet WO 2005/015270, WO 03/057641 et JP 2004-122238. Elles divulguent respectivement, en tant que revêtements directement au contact de la couche anti-salissures, des films temporaires à base de résine de polyoléfine chlorée ou de polyéthylène téréphtalate, de polytétrafluoroéthylène, ou de poly(acétate de vinyle). Ces revêtements protecteurs évitent le glissement de la lentille pendant l'opération de débordage.

Toutefois, plus la surface du verre est hydrophobe, plus l'accrochage d'un revêtement temporaire est rendue difficile. Ce problème se fait d'autant plus ressentir que l'épaisseur du revêtement temporaire est importante, en particulier pour des épaisseurs de l'ordre de 5-10 nm. Un film temporaire déposé notamment par trempage adhère difficilement à la surface du verre, plus particulièrement sur une face concave, et finit ainsi par se décrocher. Un revêtement anti-salissures tel que l'OPTOOL DSX®, commercialisé par Daikin Industries, entraîne par exemple d'importants problèmes d'étalement d'une composition de revêtement protecteur et d'adhésion du revêtement correspondant. Ces problèmes sont encore plus marqués lorsque la composition de revêtement protecteur est une composition aqueuse, en particulier un latex. Le document WO 02/092524 décrit une méthode de préparation d'un verre au débordage. Le document US 2007/0090092 décrit une méthode permettant le retrait localisé d'une partie d'une couche sur un substrat.

La présente invention a été réalisée pour apporter une solution globale à ces problèmes, quel que soit le type de substrat de lentille employé et ce, indépendemment de la géométrie de la lentille, c'est-à-dire de sa puissance.

Un premier objectif de l'invention est donc de fournir un procédé permettant le dépôt d'un revêtement temporaire sur une lentille comportant un revêtement de surface hydrophobe et/ou oléophobe sans rencontrer de problème d'adhésion entre les deux revêtements. En d'autres termes, il s'agit d'un procédé permettant de rendre une lentille ayant des propriétés de surface hydrophobes et/ou oléophobes apte au débordage.

La présente invention a également pour objectif de fournir un procédé de débordage d'une lentille revêtue d'un revêtement de surface hydrophobe et/ou oléophobe qui garantisse un taux de succès très élevé pour l'opération de débordage, permettant d'éviter tout problème de glissement de la lentille pendant l'opération de débordage en question.

Après débordage, le retrait de la couche temporaire doit permettre de récupérer un revêtement externe hydrophobe et/ou oléophobe ayant des propriétés pratiquement identiques à ses propriétés initiales et en particulier un angle de contact statique avec l'eau pratiquement égal à l'angle de contact statique avec l'eau initial.

Un autre objectif de l'invention est de fournir une lentille, ayant des propriétés de surface hydrophobes et/ou oléophobes, apte au débordage.

Les buts ici sont atteints selon l'invention par un procédé mettant en jeu la modification d'une partie de la surface hydrophobe et/ou oléophobe sur laquelle doit être déposé le revêtement temporaire, de façon à promouvoir une adhérence physique avec le revêtement protecteur.

Le procédé de traitement d'une lentille optique de l'invention, permettant notamment de rendre apte au débordage une lentille optique, comprend les étapes du procédé défini dans la revendication 1. Les revendications dépendantes définissent des modes de réalisation supplémentaires. La revendication 17 définit une lentille selon l'invention.

Dans la présente demande, lorsqu'une lentille comprend un ou plusieurs revêtements à sa surface, l'expression "déposer une couche ou un revêtement sur la lentille" signifie qu'une couche ou un revêtement est déposé sur la surface à découvert (exposée) du revêtement externe de la lentille, c'est-à-dire le revêtement le plus éloigné du substrat de la lentille.

Un revêtement qui est "sur" un substrat ou qui a été déposé "sur" un substrat est défini comme un revêtement qui (i) est positionné au-dessus du substrat, (ii) n'est pas nécessairement en contact avec le substrat, c'est-à-dire qu'un ou plusieurs revêtements intermédiaires peuvent être disposés entre le substrat et le revêtement en question, et (iii) ne recouvre pas nécessairement le substrat complètement.

Dans la présente demande le terme "polymère" englobe les homopolymères, copolymères et oligomères.

La lentille optique utilisée dans la présente invention comprend un substrat, de préférence transparent, en verre organique ou minéral, ayant une face principale convexe et une face principale concave, l'une au moins desdites faces principales comportant un revêtement anti-salissures (revêtement hydrophobe et/ou oléophobe). Le terme lentille désigne également une ébauche de lentille. Cette lentille est de préférence une lentille ophtalmique pour lunettes. La lentille peut être une lentille polarisée, une lentille photochromique ou une lentille solaire, teintée.

Le procédé de l'invention est généralement mis en oeuvre sur la face convexe de la lentille, mais il peut également être mis en oeuvre sur les deux faces principales d'une lentille revêtues chacune d'un revêtement anti-salissures.

Parmi les matériaux thermoplastiques convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC), les polyuréthanes (PU), les poly(thiouréthanes), les (co)polymères d'allylcarbonates de polyols, les copolymères thermoplastiques éthylène/acétate de vinyle, les polyesters tels que le poly(téréphtalate d'éthylène) (PET) ou le poly(téréphtalate de butylène) (PBT), les polyépisulfures, les polyépoxydes, les copolymères polycarbonates/polyesters, les copolymères de cyclo-oléfines tels que les copolymères éthylène/norbornène ou éthylène/cyclopentadiène et leurs combinaisons.

Par (co)polymère, on entend un copolymère ou un polymère. Par (méth)acrylate, on entend un acrylate ou un méthacrylate.

Parmi les substrats préférés selon l'invention, on peut citer des substrats obtenus par polymérisation des (méth)acrylates d'alkyle, en particulier des (méth)acrylates d'alkyle en C₁-C₄, tels que le (méth)acrylate de méthyle et le (méth)acrylate d'éthyle, des (méth)acrylates aromatiques polyéthoxylés tels que les di(méth)acrylates de bisphénols polyéthoxylés, des dérivés allyles tels que les allylcarbonates de polyols aliphatiques ou aromatiques, linéaires ou ramifiés, des thio(méth)acrylates, des épisulfures et de mélanges précurseurs polythiols/polyisocyanates (pour l'obtention de polythiouréthanes).

Par polycarbonate (PC), on entend au sens de la présente invention aussi bien les homopolycarbonates que les copolycarbonates et les copolycarbonates séquencés.

Les substrats particulièrement recommandés sont les substrats obtenus par (co)polymérisation du bis allyl carbonate du diéthylène glycol, vendu, par exemple, sous la dénomination commerciale CR-39® par la société PPG Industries (lentilles ORMA® ESSILOR), ou par polymérisation des monomères thio(méth)acryliques, tels que ceux décrits dans la demande de brevet français FR 2734827. Les substrats peuvent être obtenus par polymérisation de mélanges des monomères ci-dessus, ou peuvent encore comprendre des mélanges de ces polymères et (co)polymères.

Les lentilles de l'invention peuvent comporter d'autres revêtements de surface entre le substrat et le revêtement anti-salissures, notamment un revêtement antichoc, un revêtement anti-abrasion et/ou anti-rayure ou un revêtement antireflet. Préférentiellement, elles comportent un revêtement externe hydrophobe et/ou oléophobe déposé sur un revêtement antireflet mono ou multicouche.

Les revêtements hydrophobes et/ou oléophobes sont bien connus dans la technique et sont généralement déposés sur un revêtement antireflet, mais ils peuvent aussi être déposés, par exemple, directement sur des revêtements anti-abrasion et/ou anti-rayure.

Ils sont définis comme des revêtements dont l'angle de contact statique avec de l'eau désionisée est supérieur ou égal à 75°, de préférence supérieur ou égal à 90°, et mieux supérieur ou égal à 100°. L'angle de contact statique peut être déterminé selon la méthode de la goutte de liquide, selon laquelle une goutte de liquide ayant un diamètre inférieur à 2 mm est déposée doucement sur une surface solide non absorbante et l'angle à l'interface entre le liquide et la surface solide est mesuré.

Les revêtements hydrophobes et/ou oléophobes préférés ont une faible énergie de surface, c'est-à-dire qu'ils réduisent l'énergie de surface de la lentille à moins de 20 mJ/m², de préférence moins de 14 mJ/m², mieux moins de 13 mJ/m² et encore mieux moins de 12 mJ/m². Les énergies de surface sont calculés selon la méthode OWENS-WENDT décrite dans la référence suivante : "Estimation of a surface force energy of polymers" OWENS D.K., WENDT R.G. (1969) J. Appl. Polym. Sci, 13, 1741-1747.

Leur épaisseur est en général inférieure ou égale à 10 nm, de préférence de 1 à 10 nm, mieux de 1 à 5 nm, et encore mieux de 2 à 3 nm.

Les revêtements hydrophobes et/ou oléophobes selon l'invention sont de préférence de nature organique. Par couche de nature organique, on entend une couche comprenant en masse au moins 40 %, de préférence au moins 50 % de matériaux organique par rapport à la masse totale de la couche.

Les revêtements de surface hydrophobes et/ou oléophobes préférés comprennent au moins un composé fluoré, mieux au moins un composé de nature silane, silazane ou polysilazanes porteur d'un ou plusieurs groupes fluorés, en particulier des groupes hydrocarcarbonés fluorés, perfluorocarbonés, polyéther fluorés, tel que le groupe F₃C-(OC₃F₅)₂₄-O-(CF₂)₂-(CH₂)₂-O-CH₂-Si(OCH₃)₃ ou perfluoropolyéther.

Une méthode classique pour former un revêtement hydrophobe et/ou oléophobe consiste à déposer des composés porteurs de groupes fluorés et de groupes Si-R, R représentant un groupe hydroxyle ou un groupe précurseur tel qu'un groupe hydrolysable, par exemple Cl, NH₂, NH- ou -O-alkyl, de préférence un groupe alcoxy. Ils sont de préférence fabriqués à partir de fluorosilanes ou fluorosilazanes précurseurs, comprenant de préférence au moins deux groupes hydrolysables par molécule. De tels composés sont capables de subir, lorsqu'ils sont déposés sur une surface, des réactions de polymérisation et/ou de réticulation, directement ou après hydrolyse.

Des fluorosilanes particulièrement adaptés pour former des revêtements hydrophobes et/ou oléophobes sont ceux contenant des groupements fluoropolyéthers décrits dans le brevet US 6,277,485.

Ces fluorosilanes répondent à la formule générale : 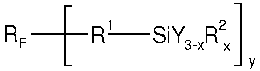 dans laquelle R_{F} est un groupe polyfluoropolyéther monovalent ou divalent, R¹ est un groupe divalent alkylène, arylène ou une combinaison de ceux-ci, contenant éventuellement un ou plusieurs hétéroatomes ou groupes fonctionnels et éventuellement substitués par des halogènes, et contenant de préférence 2 à 16 atomes de carbone ; R² est un groupe alkyle inférieur (c'est-à-dire un groupe alkyle en C₁-C₄) ; Y est un atome d'halogène, un groupe alcoxy inférieur (c'est-à-dire une groupe alcoxy en C₁-C₄, de préférence méthoxy ou éthoxy), ou un groupe acyloxy inférieur (c'est-à-dire -OC(O)R³ où R³ est un groupe alkyle en C₁-C₄) ; x est 0 ou 1 ; et y est 1 (R_{F} est monovalent) ou 2 (R_{F} est divalent). Les composés appropriés ont en général une masse molaire moyenne en nombre d'au moins 1000. De préférence, Y est un groupe alcoxy inférieur et R_{F} est un groupe perfluoropolyéther.

D'autres fluorosilanes recommandés sont ceux de formule : 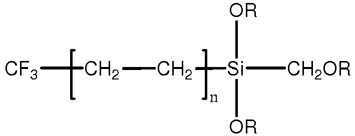 où n = 5, 7, 9 ou 11 et R est un groupe alkyle, de préférence en C₁-C₁₀ tel que -CH₃, -C₂H₅ et -C₃H₇ ;
CF₃(CF₂)₅CH₂CH₂Si(OC₂H₅)₃ ((tridécafluoro-1,1,2,2-tétrahydro)octyl-triéthoxysilane) ;

CF₃CH₂CH₂SiCl₃ ;

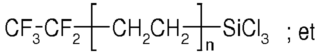

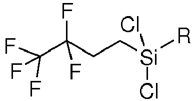

où n = 7 ou 9 et R est tel que défini ci-dessus.

Des compositions contenant des fluorosilanes également recommandées pour la préparation de revêtements hydrophobes et/ou oléophobes sont décrites dans brevet US 6,183,872. Elles contiennent des fluoropolymères à groupements organiques porteurs de groupes à base de silicium représentés par la formule générale suivante et ayant une masse moléculaire de 5.10² à 1.10⁵ : dans laquelle R_{F} représente un groupement perfluoroalkyle ; Z représente un groupe fluoro ou trifluorométhyle ; a, b, c, d et e représentent chacun, indépendamment l'un de l'autre, 0 ou un entier supérieur ou égal à 1, à la condition que la somme a+b+c+d+e ne soit pas inférieure à 1 et que l'ordre des unités répétitives figurant entre les parenthèses indexées sous a, b, c, d et e ne soit pas limité à celui représenté ; Y représente H ou un groupe alkyle comprenant de 1 à 4 atomes de carbone ; X représente un atome d'hydrogène, de brome ou d'iode ; R¹ représente un groupe hydroxyle ou un groupe hydrolysable ; R² représente un atome d'hydrogène ou un groupement hydrocarboné monovalent ; I représente 0, 1 ou 2 ; m représente 1, 2 ou 3 ; et n" représente un entier au moins égal à 1, préférentiellement au moins égal à 2.

D'autres fluorosilanes convenant pour la formation de revêtements anti-salissures sont décrits dans les brevets JP 2005-187936 et EP 1 300 433, et répondent à la formule : 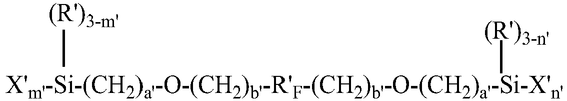 dans laquelle R'_{F} est un radical divalent perfluoropolyéther à chaîne linéaire, R' est un radical alkyle en C₁-C₄ ou un radical phényle, X' est un groupe hydrolysable, a' est un entier de 0 à 2, b' est un entier de 1 à 5, et m' et n' sont des entiers égaux à 2 ou 3.

Des compositions commerciales permettant de préparer des revêtements hydrophobes et/ou oléophobes sont les compositions KY130® (répondant à la formule du brevet JP 2005-187936) et KP 801M® commercialisées par Shin-Etsu Chemical, et la composition OPTOOL DSX® (une résine fluorée comprenant des groupes perfluoropropylène répondant à la formule du brevet US 6,183,872) commercialisée par Daikin Industries. La composition OPTOOL DSX® est la composition de revêtement anti-salissures préférée.

Des solvants utilisables pour les compositions de revêtement anti-salissures sont les solvants fluorés et les alcanols tels que le méthanol, de préférence les solvants fluorés. Des exemples de solvants fluorés sont des molécules organiques partiellement ou totalement fluorées ayant une chaîne carbonée comprenant de 1 à 25 atomes de carbone, telles que les alcanes fluorés, de préférence perfluorés, et les éther-oxydes fluorés, de préférence les éther-oxydes d'alkyle perfluoroalkylés et leurs mélanges. On peut citer le perfluorohexane ou l'éther de nonafluoro-isobutyle.

Les méthodes de dépôt des compositions de revêtement anti-salissures sont très variées et comprennent le dépôt en phase liquide, tel que le dépôt au trempé, par centrifugation ou pulvérisation, ou le dépôt en phase vapeur, tel que l'évaporation sous vide. Le dépôt par centrifugation ou trempage est préféré.

La préparation de la surface du revêtement anti-salissures est l'étape clé du procédé de l'invention, permettant une réussite complète d'un dépôt sur cette surface.

Cette préparation consiste à soumettre au moins une partie de la région périphérique de la surface principale revêtue à un traitement résultant en une élimination du revêtement hydrophobe et/ou oléophobe et/ou une modification de ce revêtement abaissant son caractère hydrophobe, dans au moins une partie de cette région périphérique.

Par zone ou région périphérique de la surface de la lentille, on entend dans la présente demande la région la plus éloignée du centre de la lentille, qui a généralement la forme d'une région annulaire.

Optionnellement, au moins une partie de la tranche de la lentille, lorsque cette tranche est recouverte au moins partiellement d'un revêtement hydrophobe et/ou oléophobe, peut en outre être soumise à un traitement résultant en une élimination du revêtement hydrophobe et/ou oléophobe et/ou une modification de ce revêtement abaissant son caractère hydrophobe, dans au moins une partie de ladite tranche. Ce traitement peut être identique à celui de la surface principale, ou bien différent. Il est en effet possible que la tranche de la lentille puisse être incidemment revêtue d'un revêtement hydrophobe et/ou oléophobe, notamment lorsque celui-ci a été déposé sur la surface principale de ladite lentille par trempage. Les traitements de la périphérie de la surface principale de la lentille qui sont décrits dans la présente demande peuvent également être appliqués à la tranche de cette lentille.

Les traitements préférés permettant de supprimer localement le revêtement hydrophobe et/ou oléophobe, et ainsi de promouvoir un accrochage local, sont les traitements mécaniques, de préférence des traitements abrasifs. Ils ont pour effet de modifier la surface avec laquelle le revêtement protecteur sera en contact, en rendant cette surface plus hydrophile.

Un traitement abrasif peut être réalisé au moyen d'un tissu abrasif ou d'une feuille ou toile abrasive, ou tout autre moyen de même nature. Toute poudre abrasive collée sur un support plan (papier, toile, papier toilé, plastique) ou cylindrique, adaptable à des tours, peut convenir pour l'invention. Des exemples de poudres abrasives utilisables, naturelles ou artificielles sont les poudres alumineuses telles que le corindon et l'émeri; les matières siliceuses telles que le verre, le sable, le talc, certains grès chargés de quartz, le quartz lui-même; la pierre ponce, le grenat, le silex, les carbures métalliques, le carbure de silicium. Il est également possible d'employer une feuille, un rouleau, ruban ou tampon abrasif synthétique du type tampons Scotch-Brite®, commercialisés par 3M. On utilise de préférence une toile émeri, un papier de verre, un papier corindon, une laine d'acier ou un tampon abrasif synthétique.

Le traitement abrasif peut être manuel ou automatisé. Selon un mode de réalisation de l'invention, l'opération d'abrasion de la périphérie de la lentille et éventuellement de la tranche de la lentille est automatisée et met en jeu une machine ou un outil pourvu d'une surface où une poudre abrasive a été collée, par exemple un tour motorisé où l'on a fixé un cylindre (meule) abrasif sur une tige rotative. Selon un mode de réalisation de l'invention, la machine ou l'outil abrasif est fixe et la lentille est disposée à proximité de l'outil ou machine et mise en rotation autour de son axe de façon à abraser sa périphérie et éventuellement sa tranche.

Après l'opération d'abrasion de la périphérie de la lentille, qui a généralement aussi pour effet de casser localement les arêtes du verre, il est préférable de procéder à un essuyage manuel ou automatisé de sa surface afin de retirer les poussières créées, et/ou à un soufflage d'air comprimé. L'essuyage est de préférence effectué à l'aide d'un tissu doux, ayant une surface duveteuse, par exemple un tissu ayant subi un traitement de suédination. Généralement, le verre traité est soufflé, essuyé, puis une nouvelle fois soufflé.

Outre ces traitements mécaniques, il est possible d'employer, si la nature du revêtement anti-salissures s'y prête, ce qui peut être déterminé facilement par l'homme du métier, des traitements chimiques ou physico-chimiques permettant d'aboutir à une élimination et/ou une modification du revêtement anti-salissures abaissant son caractère hydrophobe. Ces traitements peuvent être combinés à une action mécanique, et peuvent dans certains cas être destinés à préparer l'action mécanique.

Toute préparation de surface permettant d'abaisser la tension superficielle et favoriser ainsi l'accrochage du revêtement temporaire sans dégrader les performances du revêtement anti-salissures final (hors zone périphérique) convient pour l'invention.

Comme exemples de traitement, on peut citer un bombardement avec des espèces énergétiques, par exemple un faisceau d'ions ou un faisceau d'électrons, un traitement par décharge corona, par effluvage, un traitement UV, un traitement par plasma, par action d'un faisceau laser. Il peut également s'agir d'un traitement de surface acide ou basique et/ou par solvants. Plusieurs de ces traitements peuvent être combinés.

Par espèces énergétiques, on entend des espèces ayant une énergie allant de 1 à 150 eV, de préférence de 10 à 150 eV, et mieux de 40 à 150 eV. Les espèces énergétiques peuvent être des espèces chimiques telles que des ions, des radicaux, ou des espèces telles que des photons ou des électrons.

De tel traitements peuvent faire passer le matériau hydrophobe et/ou oléophobe dans un nouvel état en provoquant des scissions, des créations de nouvelles liaisons moléculaires, ou de groupes polaires en surface, des recombinaisons d'entités réactives, des éliminations, permettant d'aboutir localement à un nouveau matériau de propriétés de surface différentes. Par exemple, l'utilisation d'un plasma d'oxygène permet de créer des groupes hydroxyle, augmentant de ce fait la mouillabilité de la surface à revêtir. Ces traitements peuvent également augmenter localement la rugosité de la surface et favoriser l'adhérence du revêtement protecteur.

De préférence, le traitement selon l'invention élève l'énergie de surface traitée de la lentille jusqu'à une valeur d'au moins 15 mJ/m², de préférence jusqu'à une valeur d'au moins 25 mJ/m². Typiquement l'énergie de surface de la surface traitée est de 15 à 70 mJ/m², de préférence 25 à 70 mJ/m².

Les traitements en voie liquide du revêtement hydrophobe et/ou oléophobe au moyen d'acides ou de bases réalisent en quelques sortes une abrasion par corrosion superficielle. On peut citer un traitement par l'acide oxalique, l'acide chlorhydrique dilué, la soude ou la potasse diluées.

Les traitements selon l'invention abaissent généralement l'angle de contact statique avec de l'eau désionisée de la surface traitée à une valeur inférieure à 85°, de préférence inférieure à 75°, mieux inférieure à 60° et encore mieux inférieure à 50°.

Bien entendu, la surface de la lentille à propriétés hydrophobes et/ou oléophobes qui n'est pas destinée à subir le ou les traitements selon l'invention peut être protégée afin de limiter ledit traitement à la zone souhaitée.

Comme moyen de protection, il est possible d'envisager un masque ou toute autre technique appropriée, disposé sur la surface de la lentille à traiter ou éventuellement interposé entre la source et la surface à traiter dans le cas d'un traitement par des espèces énergétiques. L'utilisation de masques en optique est classique, et est décrite notamment dans le brevet US 5,792,537.

Le traitement peut affecter uniformément la région périphérique de la surface principale (et optionnellement la tranche), c'est-à-dire que la zone traitée présente une surface continue, mais l'ensemble des zones traitées peut aussi présenter une surface discontinue, en limitant par exemple le traitement aux zones souhaitées au moyen d'un masque. De préférence, le traitement selon l'invention est effectué uniformément sur une zone périphérique ayant la forme d'une couronne. Selon un autre mode de réalisation, le traitement selon l'invention est effectué, éventuellement uniformément, sur la moitié de la zone périphérique de la surface principale. Si cette région est traitée uniformément, celle-ci a alors la forme d'une demi couronne

La région traitée doit avoir une surface suffisante pour favoriser l'adhérence du revêtement temporaire devant être déposé. Toutefois, il a été constaté que même une faible surface suffisait à promouvoir l'accrochage du revêtement temporaire, ce qui rend le procédé de l'invention particulièrement attractif.

De préférence, le traitement est effectué sur au moins une partie d'une zone s'étendant du bord de la lentille jusqu'à une distance du bord de la lentille représentant moins de 2 % du rayon de la lentille, mieux moins de 1,5 %, encore mieux moins de 1 %, et idéalement moins de 0,5 %, et de préférence sur la totalité de ladite zone.

Le pourcentage de la surface d'une face de la lentille soumise au traitement selon l'invention est généralement inférieur à 5 %, de préférence inférieur à 3 %, mieux inférieur à 2 % et encore mieux inférieur à 1 %. Par exemple, dans le cas d'une lentille de 65 mm de diamètre, le traitement sera généralement effectué sur une couronne périphérique de 0,1 à 0,2 mm de largeur, ce qui représente moins de 2 % de l'aire de la face principale.

Comme indiqué précédemment, le revêtement temporaire de l'invention est déposé directement sur le revêtement externe hydrophobe et/ou oléophobe traité au cours de l'étape précédente du procédé.

Le revêtement protecteur temporaire de nature polymère est préférentiellement de nature organique. Il peut être monocouche ou multicouche, en particulier bicouche. Il peut être constitué de tout matériau polymère permettant d'élever l'énergie de surface de la lentille à propriétés hydrophobes et/ou oléophobes et susceptible d'être éliminé lors d'une opération ultérieure subséquente à l'étape de débordage.

De préférence, le revêtement temporaire élève l'énergie de surface de la lentille jusqu'à une valeur d'au moins 15 mJ/m², de préférence jusqu'à une valeur d'au moins 25 mJ/m². Typiquement l'énergie de surface du revêtement temporaire est de 15 à 70 mJ/m², de préférence 25 à 70 mJ/m².

Bien évidemment, le matériau du revêtement temporaire doit être tel qu'il n'altère pas définitivement les propriétés de surface du revêtement hydrophobe et/ou oléophobe et qu'après l'élimination de celui-ci, les propriétés optiques et de surface de la lentille sont globalement identiques à celles que la lentille possédait avant le dépôt du revêtement protecteur temporaire.

Le ou les polymères composant le revêtement temporaire peuvent être choisis parmi les polymères vinyliques, les polymères halogénés, en particulier les polyoléfines halogénées, notamment les polymères chlorés et/ou fluorés, en particulier les polyoléfines chlorées et/ou fluorées, les polyuréthanes, les polyuréthane-urées, les polyépoxydes, les polyépisulfures, les polyesters, les polyéthers, les polyester-éthers, les polythio(méth)acrylates, les poly(méth)acrylates, les résines alkyde, les polyalkylène téréphtalates (par exemple le polyéthylène téréphtalate), les polymères de cellulose et leurs mélanges. Certains de ces matériaux sont décrits dans la demande de brevet européen EP 1392613 et la demande internationale WO 2005/015270.

Parmi les polyoléfines chlorées, on peut citer le polyéthylène chloré et de polypropylène chloré. Parmi les polyoléfines fluorées, on peut citer les homo et copolymères de chlorotrifluoroéthylène, hexafluoropropène, 1-hydropentafluoropropène, 2-hydropentafluoropropène, perfluoroalkylvinyléther (par exemple perfluorométhylvinyléther), trifluoroéthylène, tétrafluoroéthylène et fluorure de vinylidène.

Parmi les polymères vinyliques, on peut citer le poly(acétate de vinyle), le polypropylène, le polyéthylène, les polymères de styrène, le poly(vinylphénol), la poly(vinylpyrrolidone) et le poly(vinylpyrrolidone-co-acétate de vinyle). Le polymère vinylique préféré est le poly(acétate de vinyle).

Les revêtements formés à partir des compositions de latex de polyuréthane ou de latex de nature poly(méth)acrylique séchées sont particulièrement intéressants. Les compositions à base de latex polyuréthane sont préférées.

Comme cela est bien connu, un latex est une dispersion dans un milieu aqueux de particules de polymères ou de copolymères. Le milieu aqueux peut être de l'eau, par exemple de l'eau distillée ou de l'eau désionisée, ou encore un mélange d'eau et d'un ou plusieurs solvants, notamment d'eau et d'alcanol, généralement un alcanol en C1 à C6, et de préférence l'éthanol.

Comme exemples de latex de nature polyuréthane, on peut citer les latex de polyuréthane comprenant des groupes polyester, de préférence polyester aliphatique. De préférence, les unités polyuréthane sont obtenues par polymérisation d'au moins un polyisocyanate aliphatique et d'au moins un polyol aliphatique. De tels latex polyuréthane-polyester sont disponibles dans le commerce auprès de ZENECA RESINS sous le nom Neorez® (par exemple, Neorez® R-962, Neorez® R-972, Neorez® R-986, Neorez® R-9603) ou de BAXENDEN CHEMICALS, une filiale de WITCO Corporation, sous le nom Witcobond® (par exemple, Witcobond® 232, Witcobond® 234, Witcobond® 240, Witcobond® 242).

Comme exemples de latex de nature poly(méth)acrylique, on peut citer les latex de copolymères formés à partir de monomères (méth)acrylate tel que par exemple le (méth)acrylate d'éthyle, de butyle, de méthoxyéthyle ou d'éthoxyéthyle, avec une proportion généralement mineure d'au moins un autre co-monomère, tel que par exemple le styrène.

Les latex poly(méth)acryliques préférés sont les latex de copolymères acrylate-styrène. De tels latex de copolymères acrylate-styrène sont disponibles commercialement auprès de la société ZENECA RESINS sous la dénomination NEOCRYL®, ou de la société B. F. Goodrich Chemical Co. sous la dénomination CARBOSET®.

De préférence le revêtement temporaire est un revêtement pelable. Son épaisseur peut varier dans des proportions assez larges, par exemple de 1 à 150 micromètres, de préférence de 10 à 40 µm, mieux de 15 à 30 µm et encore mieux de 15 à 20 µm. Il peut être déposé par tout procédé par voie liquide classique convenable tel que le trempage (dip coating), la centrifugation (spin coating), la pulvérisation, ou appliqué au moyen d'un pinceau (brush coating), de préférence par dip coating ou spin coating.

De préférence, le revêtement temporaire est formé par dépôt sur ladite surface principale de la lentille d'une composition de revêtement liquide suivi d'une étape de durcissement de la composition liquide.

Le revêtement temporaire doit être déposé sur la surface principale de la lentille revêtue du revêtement hydrophobe et/ou oléophobe traité dans l'étape précédente de façon à recouvrir au moins partiellement la région périphérique traitée et le revêtement hydrophobe et/ou oléophobe.

Le dépôt peut être effectué sur la totalité de la surface de la face de la lentille destinée à recevoir le patin adhésif de maintien ou sur une partie de celle-ci. En particulier, le revêtement temporaire pourra recouvrir la partie centrale de la lentille mais ne devra pas être appliqué uniquement sur la zone destinée à recevoir le contact du patin de maintien de la lentille. Au moins une partie de la région périphérique de la surface de la lentille traitée de façon à éliminer le revêtement hydrophobe et/ou oléophobe ou à le modifier en abaissant son caractère hydrophobe doit être revêtue du revêtement protecteur, de façon à permettre une adhésion suffisante du revêtement temporaire. Cette région périphérique a en effet été traitée dans le but de faciliter l'adhésion de la lentille au revêtement protecteur.

Le dépôt peut couvrir uniformément la zone correspondante, c'est à dire qu'il présente une structure continue, mais il peut aussi présenter une structure discontinue (dépôt intermittent), par exemple prendre la forme d'une trame. Les dépôts à structure discontinue peuvent être obtenus par tampographie.

La zone couverte par le revêtement protecteur est telle que la surface de contact entre le revêtement protecteur et le patin de maintien est suffisante pour assurer l'adhésion de la lentille au patin. Généralement, le revêtement temporaire de protection recouvre au moins 15 %, de préférence au moins 20 %, mieux au moins 30 %, mieux encore au moins 40%, et de préférence la totalité de la surface de la face de la lentille sur laquelle vient adhérer le patin, c'est-à-dire généralement la face convexe de la lentille.

De préférence, et tout particulièrement lorsque le revêtement temporaire est déposé sur la totalité d'une des faces de la lentille, ce revêtement présente un certain degré de transparence permettant d'effectuer sur la lentille des mesures classiques de puissance par un frontofocomètre. Ainsi donc, la lentille revêtue du revêtement temporaire selon l'invention présente de préférence une transmission d'au moins 18%, de préférence au moins 40% selon la norme ISO 8980/3.

A la suite du dépôt du revêtement protecteur externe, temporaire, on obtient une lentille apte au débordage.

Le procédé de traitement d'une lentille optique selon l'invention peut en outre comprendre une étape ultérieure de glantage de la lentille comportant le revêtement temporaire en contact direct avec le revêtement hydrophobe et/ou oléophobe, c'est-à-dire une étape de disposition de ladite lentille dans un dispositif de débordage comportant un patin de maintien de sorte que le patin de maintien adhère au revêtement temporaire, une étape de débordage de la lentille glantée, et une étape de déglantage consistant à retirer la lentille du dispositif de débordage. Ces étapes additionnelles sont classiques et connues de l'homme de l'art, et ne seront donc pas décrites en détail. Le procédé de traitement selon l'invention constitue dans ce cas un procédé de débordage d'une lentille optique.

On peut préciser cependant que les patins de maintien utilisés préférentiellement lors du glantage sont des pastilles autocollantes double face, par exemple des adhésifs de marque 3M.

Après débordage, le verre présentera les dimensions requises pour convenablement s'insérer dans la monture qui lui est destinée. Plus précisément, le procédé de débordage selon l'invention fournit des verres ayant subi un désaxage maximum de 2°, et, de façon optimale, inférieur ou égal à 1 °.

Dans une étape ultérieure, le revêtement protecteur temporaire peut être éliminé de la lentille débordée, afin de lui restituer ses propriétés de surface hydrophobes et/ou oléophobes. Ce revêtement protecteur, selon sa nature, peut être dégradé mécaniquement par exemple par essuyage à sec, par élimination en milieu liquide approprié, ou simplement retiré lorsqu'il est pelable, ou par une mise en oeuvre successive de plusieurs de ces moyens. Ces étapes d'élimination sont déjà décrites dans l'état de l'art et ne seront pas détaillées.

A la fin de l'étape d'élimination de la couche protectrice temporaire, une lentille optique finale débordée est récupérée, laquelle présente des caractéristiques optiques et de surface du même ordre, voire quasiment identiques à celles de la lentille initiale, notamment en ce qui concerne ses propriétés de surface hydrophobes et/ou oléophobes.

Le procédé de l'invention possède l'avantage d'augmenter de façon conséquente le taux de réussite du débordage de lentilles revêtues d'un revêtement hydrophobe et/ou oléophobe par rapport à un procédé où une telle lentille est simplement revêtue d'un revêtement protecteur, sans préparation de surface. Le taux de réussite d'un procédé de débordage conforme à l'invention avoisine 100 %, et permet donc de s'affranchir des aléas dus à la qualité des verres débordés.

L'invention concerne également une lentille optique apte au débordage, susceptible d'être obtenue par le procédé de l'invention, comportant sur au moins une de ses surfaces principales un revêtement externe hydrophobe et/ou oléophobe, au moins une partie de la région périphérique de ladite surface principale revêtue ayant été soumise à un traitement résultant en une élimination du revêtement hydrophobe et/ou oléophobe et/ou une modification de ce revêtement abaissant son caractère hydrophobe, dans au moins une partie de cette région périphérique, et, déposé directement sur ledit revêtement externe hydrophobe et/ou oléophobe, un revêtement temporaire de nature polymère, ledit revêtement temporaire recouvrant au moins partiellement le revêtement hydrophobe et/ou oléophobe et la région périphérique soumise audit traitement, adhérant ainsi à la surface de la lentille.

L'invention est illustrée, de façon non limitative, par les exemples suivants :

### Exemples 1 à 10 et comparatifs 1 à 5 :

15 lentilles ophtalmiques en ORMA® d'Essilor sont traitées de la façon suivante :
Après dépôt d'un revêtement anti-abrasion par trempé et d'un revêtement antireflet multicouche à base de couches alternées de ZrO₂ et de SiO₂, par évaporation, on dépose, toujours par évaporation, une couche hydrophobe et/ou oléophobe dans une enceinte à vide de marque Satis 1200 DL.

Les conditions de dépôt de la couche hydrophobe et/ou oléophobe sont les suivantes :
Epaisseur programmée = 14 nm, Pression = 1×10⁻³ Pa (pression induite)
Durée du dépôt = 1 à 2 minutes
Puissance de l'effet joule = 13 à 15 %
Vitesse de dépôt programmée = 0,4 nm/s
Température = 40 °C (non contrôlée)
L'épaisseur réelle de la couche déposée varie de 2 à 5 nm.

Après récupération des lentilles traitées, on procède au dépôt au trempé sur 15 lentilles d'une composition de revêtement temporaire à base de latex de polyuréthane PROXR 910® obtenu auprès de la société SYNTRON.

Sur ces 15 lentilles, 5 lentilles n'ont subi aucun traitement préalable au dépôt de la couche temporaire, 5 ont subi un traitement abrasif de surface, à la périphérie annulaire de la lentille au moyen d'un papier abrasif toile émeri (type Norton R222) avec un grain fin de 180, et 5 lentilles ont été abrasées de la même façon qu'avec la toile émeri, mais avec un tissu Scotch Brite de la société 3M.

Pour les 5 lentilles qui n'ont pas subi de traitement abrasif préalable, on constate que, pour trois de ces lentilles, il n'a pas été possible de former une couche de latex de polyuréthane adhérente après avoir retiré les lentilles du bain de latex (soit un taux d'échec de 60 %).

En revanche, pour les 10 lentilles ayant subi un traitement de surface conforme à l'invention, on obtient un film formé sur toute la surface de la lentille, qui, une fois séché, est adhérent et permet le débordage des lentilles sans désaxage.

Le film est pelé manuellement après débordage.

### Exemples 11 à 20

Les essais ci-dessus sont reproduits en déposant des couches plus épaisses d'Optool DSX® (épaisseur programmée : 20 nm), dans les mêmes conditions de dépôt que ci-dessus. Les épaisseurs réellement obtenues de couches d'Optool DSX® sont de l'ordre de 5 à 10 nm.

On fabrique les mêmes lentilles que dans les exemples précédents (hormis l'épaisseur de la couche hydrophobe et/ou oléophobe).

Les mêmes résultats que précédemment sont obtenus, à savoir un taux d'échec de 60 % pour les verres non abrasés préalablement et un taux de réussite de 100 % pour les verres abrasés, c'est-à-dire que l'on forme un film recouvrant l'ensemble de la surface du verre dès le premier dépôt au trempé, et la couche temporaire obtenue permet de réussir l'opération de débordage.

On constate donc que l'invention produit son résultat avantageux même si l'épaisseur de la couche hydrophobe et/ou oléophobe est plus importante.

D'autres exemples effectués sur des substrats en polycarbonate (plus difficile à détourer) ont été réalisés et ont donné les mêmes résultats.

### PROTOCOLE DE MESURE DE DESAXAGE DE LENTILLES SOUMISES A UNE OPERATION DE DETOURAGE

### I- Description du test

Le test de débordage est effectué sur une meuleuse Essilor Kappa. Les lentilles sont débordées de façon à leur donner la forme d'un gabarit de monture spécifique (voir ci-dessous). Les équipements suivants sont nécessaires pour réaliser le test :
Frontofocomètre Essilor CLE 60 (pour pointage des verres et contrôle final)
Chaîne numérique Essilor Kappa (Centreur/Bloqueur et Meuleuse)
Gabarit de monture de type Charmant référence 8320, modèle 05, taille 51
Pseudo monture de contrôle
Pastille adhésive ou patin adhésif de maintien LEAP II de diamètre 24 mm GAM200 de la société 3M
Gland Essilor pour accueillir la pastille adhésive

### II- L'échantillonnage et les paramètres de montage

Les cotes de montage retenues sont les suivantes :
Hauteur : Demi-hauteur boxing soit PD (droite et gauche) = 32 mm et Axe = 90°

Le cycle de détourage utilisé est un cycle adapté au matériau (cycle plastique pour bas indice de réfraction, cycle polycarbonate pour PC et cycle pour substrat Moyen indice de réfraction MHI). La pression de serrage retenue est la pression correspondant à l'option verre fragile de la meuleuse.

### III- Contrôles

Après débordage, on effectue un contrôle afin de déterminer si l'opération de débordage a été effectuée de façon satisfaisante. Les contrôles sont effectués à l'aide du frontofocomètre CLE 60 en pointant les lentilles placées dans la pseudo-monture. Les axes sont repérés durant cette phase.

Si la lentille, après l'opération de débordage ne peut être insérée dans la pseudo-monture ou si la lentille peut être insérée dans la pseudo-monture, mais qu'elle présente un désaxage de plus de 2°, la lentille est non-conforme et n'a pas passé le test. Si le verre présente un désaxage de moins de 2°, la lentille passe le test de débordage.

## Revendications

1. Procédé de traitement d'une lentille optique, comprenant les étapes suivantes :
- fournir une lentille optique revêtue sur au moins une de ses surfaces principales d'un revêtement externe hydrophobe et/ou oléophobe;
- former un revêtement temporaire de nature polymère sur ladite surface principale de la lentille de façon à recouvrir au moins partiellement le revêtement hydrophobe et/ou oléophobe, le revêtement temporaire étant formé par dépôt sur ladite surface principale de la lentille d'une composition de revêtement liquide suivi d'une étape de durcissement de la composition liquide;
- récupérer la lentille optique comportant sur au moins une de ses surfaces principales un revêtement externe hydrophobe et/ou oléophobe et, en contact direct avec ledit revêtement hydrophobe et/ou oléophobe, un revêtement temporaire de nature polymère adhérant à la surface de la lentille,
**caractérisé en ce que**, préalablement à l'étape de dépôt du revêtement temporaire sur la surface principale de la lentille, on soumet au moins une partie de la région périphérique de ladite surface principale revêtue du revêtement hydrophobe et/ou oléophobe à un traitement résultant en une élimination de ce revêtement et/ou une modification de ce revêtement abaissant son caractère hydrophobe, dans au moins une partie de cette région périphérique, et **en ce que** ledit revêtement temporaire est déposé sur ladite surface principale de la lentille de façon à recouvrir en outre au moins partiellement la région périphérique traitée dans l'étape précédente.

2. Procédé selon la revendication 1, **caractérisé en ce que** le traitement est un traitement mécanique, de préférence un traitement abrasif.

3. Procédé selon la revendication 2, **caractérisé en ce que** le traitement abrasif est réalisé au moyen d'un tissu abrasif ou d'une feuille ou toile abrasive, ou d'un tampon abrasif synthétique.

4. Procédé selon la revendication 1, **caractérisé en ce que** le traitement est un traitement chimique ou physico-chimique.

5. Procédé selon la revendication 4, **caractérisé en ce que** le traitement est un bombardement avec des espèces énergétiques, choisi parmi un traitement par faisceau d'ions, un traitement par faisceau d'électrons, un traitement par décharge corona, un traitement par effluvage, un traitement UV, un traitement par plasma, un traitement par action d'un faisceau laser, un traitement de surface acide ou basique, un traitement par solvant, ou une combinaison de ces traitements.

6. Procédé selon l'une quelconque des revendications précédentes, **caractérisé en ce que** la tranche de la lentille est recouverte au moins partiellement d'un revêtement hydrophobe et/ou oléophobe, et **en ce qu'**au moins une partie de la tranche de la lentille est soumise à un traitement résultant en une élimination de ce revêtement hydrophobe et/ou oléophobe et/ou une modification de ce revêtement abaissant son caractère hydrophobe, dans au moins une partie de ladite tranche.

7. Procédé selon l'une quelconque des revendications précédentes, **caractérisé en ce que** le traitement abaisse l'angle de contact statique avec de l'eau désionisée de la surface traitée à une valeur inférieure à 85°, de préférence inférieure à 75°, mieux inférieure à 60° et encore mieux inférieure à 50°.

8. Procédé selon l'une quelconque des revendications précédentes, **caractérisé en ce que** le traitement est effectué sur au moins une partie d'une zone s'étendant du bord de la lentille jusqu'à une distance du bord de la lentille représentant moins de 2 % du rayon de la lentille, mieux moins de 1,5 %, encore mieux moins de 1 %, et idéalement moins de 0,5 %, et de préférence sur la totalité de ladite zone.

9. Procédé selon l'une quelconque des revendications précédentes, **caractérisé en ce que** le pourcentage de la surface d'une face de la lentille soumise au traitement est inférieur à 5 %, de préférence inférieur à 3 %, mieux inférieur à 2 % et encore mieux inférieur à 1 %.

10. Procédé selon l'une quelconque des revendications précédentes, **caractérisé en ce que** le revêtement temporaire est à base d'au moins un polymère choisi parmi les polymères vinyliques, les polymères halogénés, les polyuréthanes, les polyuréthane-urées, les polyépoxydes, les polyépisulfures, les polyesters, les polyéthers, les polyester-éthers, les polythio(méth)acrylates, les poly(méth)acrylates, les résines alkyde, les polyalkylène téréphtalates et les polymères de cellulose.

11. Procédé selon l'une quelconque des revendications précédentes, **caractérisé en ce que** le revêtement temporaire est formé à partir d'une composition de latex de polyuréthane ou de latex de nature poly(méth)acrylique.

12. Procédé selon l'une quelconque des revendications précédentes, **caractérisé en ce que** le revêtement temporaire est un revêtement pelable.

13. Procédé selon l'une quelconque des revendications précédentes, **caractérisé en ce que** le revêtement temporaire a une épaisseur allant de 1 à 150 µm, de préférence de 10 à 40 µm, mieux de 15 à 30 µm et encore mieux de 15 à 20 µm.

14. Procédé selon l'une quelconque des revendications précédentes, **caractérisé en ce que** la lentille optique est revêtue sur au moins une de ses surfaces principales d'un revêtement externe hydrophobe et/ou oléophobe réduisant l'énergie de surface de la lentille à moins de 14 mJ/m².

15. Procédé selon l'une quelconque des revendications précédentes, **caractérisé en ce que** le revêtement temporaire est déposé par trempage ou par centrifugation, de préférence par trempage.

16. Procédé selon l'une quelconque des revendications précédentes, **caractérisé en ce qu'**il comprend en outre les étapes suivantes :
- disposer ladite lentille dans un dispositif de débordage comportant un patin de maintien de sorte que le patin de maintien adhère au revêtement temporaire;
- déborder ladite lentille;
- retirer la lentille du dispositif de débordage; et
- éliminer le revêtement temporaire de façon à récupérer une lentille optique finale débordée.

17. Lentille optique apte au débordage, susceptible d'être obtenue par le procédé selon l'une quelconque des revendications 1 à 14, comprenant sur au moins une de ses surfaces principales un revêtement externe hydrophobe et/ou oléophobe et, en contact direct avec ledit revêtement hydrophobe et/ou oléophobe, un revêtement temporaire de nature polymère formé sur ladite surface de la lentille de façon à recouvrir au moins partiellement le revêtement hydrophobe et/ou oléophobe, **caractérisée en ce qu'**une partie au moins de la région périphérique de ladite surface principale revêtue du revêtement hydrophobe et/ou oléophobe a été soumise, avant la formation du revêtement temporaire sur la surface principale de la lentille, à un traitement résultant en une élimination de ce revêtement et/ou une modification de ce revêtement abaissant son caractère hydrophobe, dans au moins une partie de cette région périphérique, ledit revêtement temporaire étant déposé sur ladite surface principale de la lentille de façon à recouvrir en outre au moins partiellement la région périphérique traitée.

## Patentansprüche

1. Verfahren zur Behandlung einer optischen Linse, das folgende Schritte umfasst:
- Bereitstellen einer optischen Linse, die auf mindestens einer ihrer Hauptflächen mit einer wasser- und/oder ölabweisenden äußeren Beschichtung beschichtet ist;
- Bilden einer polymeren temporären Beschichtung auf der Hauptfläche der Linse, damit die wasser- und/oder ölabweisende Beschichtung zumindest teilweise bedeckt wird, wobei die temporäre Beschichtung durch Aufbringen einer flüssigen Beschichtungszusammensetzung auf die Hauptfläche der Linse, gefolgt von einem Schritt zum Aushärten der flüssigen Zusammensetzung gebildet wird;
- Erhalten der optischen Linse, die auf mindestens einer ihrer Hauptflächen eine wasser- und/oder ölabweisende äußere Beschichtung und im direkten Kontakt mit der wasser- und/oder ölabweisenden Beschichtung eine polymere temporäre Beschichtung aufweist, die an der Oberfläche der Linse haftet,
**dadurch gekennzeichnet, dass** vor dem Schritt des Aufbringens der temporären Beschichtung auf der Hauptfläche der Linse zumindest ein Teil des Randbereichs der Hauptfläche, der mit der wasser- und/oder ölabweisenden Beschichtung beschichtet ist, einer Behandlung unterzogen wird, die zu einer Entfernung dieser Beschichtung und/oder einer Modifikation dieser Beschichtung führt, durch die ihr wasserabweisender Charakter schwächer wird, in zumindest einem Teil dieses Randbereichs, und dadurch, dass die temporäre Beschichtung auf der Hauptfläche der Linse derart aufgebracht wird, dass sie ferner zumindest teilweise den Randbereich bedeckt, der im vorhergehenden Schritt behandelt wurde.

2. Verfahren nach Anspruch 1, **dadurch gekennzeichnet, dass** die Behandlung eine mechanische Behandlung, vorzugsweise eine Schleifbehandlung ist.

3. Verfahren nach Anspruch 2, **dadurch gekennzeichnet, dass** die Schleifbehandlung mit einem Schleifgewebe oder einer Schleiffolie oder einem Schleiftuch oder mit einem synthetischen Schleifschwamm vorgenommen wird.

4. Verfahren nach Anspruch 1, **dadurch gekennzeichnet, dass** die Behandlung eine chemische oder physikalischchemische Behandlung ist.

5. Verfahren nach Anspruch 4, **dadurch gekennzeichnet, dass** die Behandlung ein Beschießen mit energiereichen Teilchen ist, die ausgewählt ist aus einer Behandlung mit Ionenstrahlen, einer Behandlung mit Elektronenstrahlen, einer Behandlung mit Koronaentladung, einer Koronabehandlung, einer UV-Behandlung, einer Plasmabehandlung, einer Behandlung durch Einwirkung eines Laserstrahls, einer sauren oder basischen Oberflächenbehandlung, einer Behandlung mit einem Lösungsmittel oder einer Kombination aus diesen Behandlungen.

6. Verfahren nach einem der vorhergehenden Ansprüche, **dadurch gekennzeichnet, dass** der Linsenrand zumindest teilweise mit einer wasser- und/oder ölabweisenden Beschichtung bedeckt wird, und dadurch, dass zumindest ein Teil des Linsenrands einer Behandlung unterzogen wird, die zu einer Entfernung dieser wasser- und/oder ölabweisenden Beschichtung und/oder einer Modifikation dieser Beschichtung führt, durch die ihr wasserabweisender Charakter schwächer wird, in zumindest einem Teil des Rands.

7. Verfahren nach einem der vorhergehenden Ansprüche, **dadurch gekennzeichnet, dass** die Behandlung den statischen Kontaktwinkel der behandelten Oberfläche mit entionisiertem Wasser auf einen Wert unter 85°, vorzugsweise unter 75°, besser unter 60° und noch besser unter 50° senkt.

8. Verfahren nach einem der vorhergehenden Ansprüche, **dadurch gekennzeichnet, dass** die Behandlung an zumindest einem Teil eines Bereichs vorgenommen wird, der von der Umrandung der Linse bis zu einer Entfernung von der Umrandung der Linse verläuft, die weniger als 2 % des Radius der Linse, besser weniger als 1,5 %, noch besser weniger als 1 % und im Idealfall weniger als 0,5 % darstellt, und vorzugsweise über den gesamten Bereich.

9. Verfahren nach einem der vorhergehenden Ansprüche, **dadurch gekennzeichnet, dass** der prozentuale Anteil der Oberfläche einer Fläche der Linse, die behandelt wird, unter 5 %, vorzugsweise unter 3 %, besser unter 2 % und noch besser unter 1 % liegt.

10. Verfahren nach einem der vorhergehenden Ansprüche, **dadurch gekennzeichnet, dass** die temporäre Beschichtung auf mindestens einem Polymer basiert ausgewählt aus Vinylpolymeren, halogenierten Polymeren, Polyurethanen, Polyurethan-Harnstoffen, Polyepoxiden, Polyepisulfiden, Polyestern, Polyethern, Polyester-Ethern, Polythio(meth)acrylaten, Poly(meth)acrylaten, Alkydharzen, Polyalkylenterephthalaten und Cellulosepolymeren.

11. Verfahren nach einem der vorhergehenden Ansprüche, **dadurch gekennzeichnet, dass** die temporäre Beschichtung aus einer Polyurethan-Latex- oder Polymethacryl-Latex-Zusammensetzung gebildet wird.

12. Verfahren nach einem der vorhergehenden Ansprüche, **dadurch gekennzeichnet, dass** die temporäre Beschichtung eine abziehbare Beschichtung ist.

13. Verfahren nach einem der vorhergehenden Ansprüche, **dadurch gekennzeichnet, dass** die temporäre Beschichtung eine Dicke zwischen 1 und 150 µm, vorzugsweise zwischen 10 und 40 µm, besser zwischen 15 und 30 µm und noch besser zwischen 15 und 20 µm aufweist.

14. Verfahren nach einem der vorhergehenden Ansprüche, **dadurch gekennzeichnet, dass** die optische Linse auf mindestens einer ihrer Hauptflächen mit einer wasser- und/oder ölabweisenden äußeren Beschichtung beschichtet wird, die die Oberflächenenergie der Linse auf weniger als 14 mJ/m² herabsetzt.

15. Verfahren nach einem der vorhergehenden Ansprüche, **dadurch gekennzeichnet, dass** die temporäre Beschichtung durch Eintauchen oder Rotationsbeschichten, vorzugsweise durch Eintauchen, aufgebracht wird.

16. Verfahren nach einem der vorhergehenden Ansprüche, **dadurch gekennzeichnet, dass** es ferner folgende Schritte umfasst:
- derartiges Anordnen der Linse in einer Randungsvorrichtung, die einen Halteblock umfasst, dass der Halteblock an der temporären Beschichtung haftet;
- Randen der Linse;
- Entnehmen der Linse aus der Randungsvorrichtung; und
- Entfernen der temporären Beschichtung, damit eine endgültige gerandete optische Linse erhalten wird.

17. Zur Randung geeignete optische Linse, die sich mit dem Verfahren nach einem der Ansprüche 1 bis 14 erhalten lässt, die auf mindestens einer ihrer Hauptflächen eine wasser- und/oder ölabweisende äußere Beschichtung und im direkten Kontakt mit der wasser- und/oder ölabweisenden Beschichtung eine polymere temporäre Beschichtung umfasst, die an der Oberfläche der Linse derart gebildet ist, dass sie zumindest teilweise die wasser- und/oder ölabweisende Beschichtung bedeckt, **dadurch gekennzeichnet, dass** zumindest ein Teil des Randbereichs der Hauptfläche, der mit der wasser- und/oder ölabweisenden Beschichtung beschichtet ist, vor der Bildung der temporären Beschichtung auf der Hauptfläche der Linse einer Behandlung unterzogen wurde, die zu einer Entfernung dieser Beschichtung und/oder einer Modifikation dieser Beschichtung führt, durch die ihr wasserabweisender Charakter schwächer wird, in zumindest einem Teil dieses Randbereichs, wobei die temporäre Beschichtung auf der Hauptfläche der Linse derart aufgebracht ist, dass sie ferner zumindest teilweise den behandelten Randbereich bedeckt.

## Claims

1. A method for treating an optical lens, comprising the following steps:
- providing an optical lens coated on at least one of the main surfaces thereof with a hydrophobic and/or oleophobic outer coating;
- forming a temporary coating of polymeric nature onto said main surface of the lens so as to cover at least partially the hydrophobic and/or oleophobic coating, the temporary coating being formed by depositing onto said main surface of the lens a liquid coating composition, and then curing the liquid composition;
- recovering the optical lens comprising onto at least one of the main surfaces thereof a hydrophobic and/or oleophobic outer coating and, in direct contact with said hydrophobic and/or oleophobic coating, a temporary polymeric coating adhering to the surface of the coated lens,
**characterized in that**, prior to the step of depositing the temporary coating onto the main surface of the lens, at least part of the peripheral area of said main surface coated with the hydrophobic and/or oleophobic coating is submitted to a treatment resulting in the removal of said coating and/or to the modification of said coating that lowers the hydrophobic character thereof, in at least part of this peripheral area, and **in that** said temporary coating is deposited onto said main surface of the lens so as to further cover at least partially the peripheral area treated during the previous step.

2. A method according to claim 1, wherein the treatment is a mechanical treatment, preferably an abrasive treatment.

3. A method according to claim 2, wherein the abrasive treatment is performed by means of an abrasive fabric or an abrasive sheet or cloth, or a synthetic abrasive pad.

4. A method according to claim 1, wherein the processing is a chemical or a physico-chemical treatment.

5. A method according to claim 4, wherein the processing is a bombardment using energetic species, selected from an ion beam or an electron beam treatment, a corona discharge treatment, an ion spallation treatment, an ultraviolet treatment, a plasma treatment, a laser beam treatment, an acid or a base surface treatment, a solvent treatment, or a combination of these treatments.

6. A method according to any one of the preceding claims, wherein the lens edge is covered at least partially with a hydrophobic and/or oleophobic coating, and at least part of the lens edge is submitted to a processing resulting in the removal of said hydrophobic and/or oleophobic coating and/or in the modification of said coating that lowers the hydrophobic character thereof, in at least part of said edge.

7. A method according to any one of the preceding claims, wherein the processing lowers the static contact angle with deionized water of the treated surface to a value of less than 85°, preferably of less than 75°, more preferably of less than 60° and even more preferably of less than 50°.

8. A method according to any one of the preceding claims, wherein the processing is carried out on at least part of an area extending from the edge of the lens up to a distance from the edge of the lens representing less than 2% of the radius of the lens, more preferably less than 1.5%, even more preferably less than 1%, and most preferably less than 0.5%, and preferably on the whole surface of such area.

9. A method according to any one of the preceding claims, wherein the percentage of the surface of the lens face that is submitted to the processing is of less than 5%, preferably is of less than 3%, more preferably is of less than 2% and even more preferably is of less than 1%.

10. A method according to any one of the preceding claims, wherein the temporary coating is based on at least one polymer selected from vinyl polymers, halogenated polymers, polyurethanes, polyurethane-ureas, polyepoxides, polyepisulfides, polyesters, polyethers, polyester-ethers, polythio(meth)acrylates, poly(meth)acrylates, alkyd resins, polyalkylene terephtalates and cellulose polymers.

11. A method according to any one of the preceding claims, wherein the temporary coating is formed from a polyurethane latex or a poly(meth)acrylic latex composition.

12. A method according to any one of the preceding claims, wherein the temporary coating is a strippable coating.

13. A method according to any one of the preceding claims, wherein the temporary coating has a thickness ranging from 1 to 150 µm, preferably from 10 to 40 µm, more preferably from 15 to 30 µm and even more preferably from 15 to 20 µm.

14. A method according to any one of the preceding claims, wherein the optical lens is coated on at least one of its main surfaces with an external hydrophobic and/or oleophobic coating reducing the lens surface energy to less than 14 mJ/m².

15. A method according to any one of the preceding claims, wherein the temporary coating is deposited by dip-coating or spin-coating, preferably dip-coating.

16. A method according to any one of the preceding claims, which further comprises the steps of:
- placing said lens in an edging device comprising a holding pad so that the holding pad adheres to the temporary coating;
- edging said lens;
- withdrawing the lens from the edging device; and
- removing the temporary coating so as to recover a final edged optical lens.

17. An optical lens capable of undergoing an edging process, obtainable through the method according to any one of claims 1 to 14, comprising onto at least one of the main surfaces thereof a hydrophobic and/or oleophobic outer coating and, in direct contact with said hydrophobic and/or oleophobic coating, a temporary polymeric coating formed on said surface of the lens so as to cover at least partially the hydrophobic and/or oleophobic coating, **characterized in that** at least part of the peripheral area of said main surface coated with the hydrophobic and/or oleophobic coating has been submitted, prior to the step of depositing the temporary coating onto the main surface of the lens, to a treatment resulting in the removal of said coating and/or to the modification of said coating that lowers the hydrophobic character thereof in at least part of this peripheral area, said temporary coating being deposited onto said main surface of the lens so as to further cover at least partially the peripheral area treated.
